# EUROPEAN PATENT APPLICATION

(11) **EP 1 416 472 A1**
(43) Date of publication of application: **06.05.2004**
(21) Application number: 02024182.4
(22) Date of filing: 30.10.2002
(51) Int. Cl.: G10L 15/16

(54) **Bandwidth dependent speech recognition system**

(71) Applicant: Swisscom AG, 3050 Bern (CH)
(72) Inventor: Van Kommer, Robert, 1752 Villars-sur-Glâne (CH)
(74) Representative: Saam, Christophe

(57) **Abstract**

A neural network system (8) comprises a plurality of interconnected computing elements (8001, 8003, 8004, 8005) arranged in a plurality of tiers, each tier comprising a plurality of layers. The neural network system is a multirate system and has been trained to process speech feature vectors (6) corresponding to portions of speech signals having different bandwidths.

Application: speech processing, including speech recognition, speaker identification and speaker verification.

## Description

The invention relates to a speech processing method and to an improved pattern matching system trained with feature vectors extracted from digital speech signals. More specifically, the invention relates to an improved speech processing system which can be easily integrated in various environments and to a more versatile speech processing method.

A common task in speech processing systems is speech recognition. A speech recognition system is an automated system that receives a digital speech signal spoken by one or several speakers and determines the words and sentences that are spoken. Other common tasks include for example speaker identification, i.e. determining which one of a group of known speakers has generated a received speech signal, and speaker verification, i.e. verifying from a speech signal if the identity claimed by a speaker is correct.

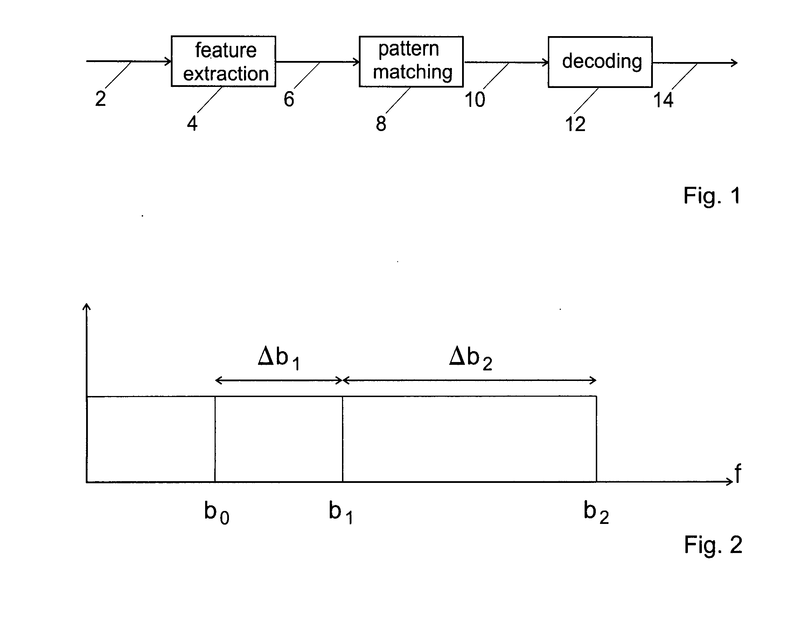

Current speech processing systems comprise traditionally a sequence of processing blocs, as illustrated on Figure 1:

Firstly, a feature extraction bloc 4 transforms a speech signal 2 into a representation 6 better suited for the subsequent processing blocs. Speech signals 2 may be provided in digital form with different sampling rates, or in analog form, in which case they have to be converted to a digital speech signal first. The feature extraction bloc converts the frames including a given number of samples of the digital speech signal 2 into feature vectors 6 containing a set of values representing the input frame in the time and frequency domain.

Several pre-processing steps are performed by the feature extraction bloc 4, including filtering, pre-emphasis, noise compensation and normalization. Furthermore, most feature extraction blocs convert the time-related speech signal into the frequency domain through, for instance, a Fast Fourier Transform (FFT), a wavelet transform, a Linear Prediction Code or a Filterbank. Subsequently, a mapping is often realized to include psychoacoustic compensations into the time-to-frequency transformation. Finally, post-processing techniques are often applied through adding derivatives of first and second order, and furthermore, normalization or filtering is often applied. The computed feature vectors also need to be de-correlated given the specific pattern-matching mechanism. The feature extraction bloc delivers a stream 6 of successive feature vectors corresponding to the input speech signal. The vector rate at which the feature vectors are delivered is usually lower than the sampling rate of the input speech signal.

A pattern matching bloc 8, or classifier, maps the feature vectors in the data stream 6 delivered by the feature extraction bloc 4 to target speech elements. In a speech recognition system, the pattern matching bloc indicates for each feature vector, corresponding to a frame of the input speech signal, the probability 10 that it corresponds to different speech elements, for examples words, subwords, phonemes, triphones, etc.

Several types of pattern matching blocs are known, including Hidden Markov Models that use mixtures of Gaussian functions, Neural Networks, Hybrid systems, Support Vector Machines, etc. As a special kind of Neural Network, Time Delay Neural Networks (TDNN) have already been used which deliver output probabilities 10 depending on several successive feature vectors, thus modeling the time relation between successive frames.

A decoder bloc 12 determines then the most likely sentence 14 spoken by the speaker given the successive speech elements and probabilities 10 delivered by the pattern-matching bloc 8. A Viterbi decoding system is often used for this function; the search is usually constrained through a Markov Model of the task.

The systems known in the prior art thus match each feature vector, corresponding to a fixed number of frames of the digital speech signal into a particular speech element. This only works if each feature vector and each frame corresponds to a fixed duration of the speech signal. Thus, the number of speech samples in each frame as well as the sampling period between each sample must have fixed values.

Those prior-art systems are perfectly adapted to speech processing systems dedicated to the processing of input speech signals 2 with a known, fixed bandwidth. However, there are applications in which it would be convenient to have a speech processing system that could process digital speech signals with different bandwidths or sampled at different sampling rates. For instance, while speech signals with an 8kHz bandwidth are usually available for systems running on personal computers or handheld devices, the bandwidth available for telephony applications is often restricted to 4kHz. In some systems, including packet-oriented voice transmission systems, such as Voice over IP systems, the bandwidth may even be variable in time or depend on the bandwidth currently available in the transmission channel and on the currently chosen channel, for example, GSM, GPRS, HSCSD, UMTS or a wireless LAN.

In this case, a frame of the speech signal including a fixed number of speech samples may correspond to segments of speech of different bandwidths and possibly of different durations. The pattern matching bloc 8 thus will have to find a different speech element depending on the bandwidth of the input digital speech signal.

In many prior art speech processing systems, a low-pass filter is used for limiting the processing to a low-pass sub-band for which the system has been trained. Higher-frequency content of the speech signals is disregarded and not used for the speech processing. Those systems thus provide the same poor speech processing performances, regardless of the available bandwidth. On the other side, if the bandwidth of the input speech signal is even lower than the bandwidth of the filter, the neural network will make the false assumption that there is no high frequency content, instead of adapting the processing task to this low-band signal. This will lead to an increased error rate and to an even poorer performance than could be reached by a processing network trained for low-pass signals.

Multiresolution speech processing systems have already been suggested in which a different pattern matching system 8 is provided to deal with different subbands of the speech processing system. Current speech processing systems able to deal with input speech signals that have *n* different bandwidths therefore have almost *n* times the complexity and cost of systems dedicated to one single bandwidth. Furthermore, those systems need to be trained independently with *n* training input signals corresponding to the *n* sampling rates they have to learn. For speech processing, this means that *n* different speech models have to be built for the *n* different possible bandwidths. Building a speech model is a time consuming and costly operation.

Therefore, it is an aim of the current invention to provide an improved, more versatile speech processing system which can process different digital speech signals having different bandwidths, without having the complexity and cost of duplicating single speech processing systems, one for each specific sub-band.

It is another aim of the invention to provide a method for processing digital speech signals having different bandwidths while still delivering the maximal recognition performance possible for the bandwidth.

In accordance with one embodiment of the present invention, those aims are achieved with a neural network system comprising a plurality of interconnected computing elements and which has been trained to process feature vectors corresponding to portions of speech signals of different bandwidths. Preferably, the neural network can also process different streams of speech feature vectors having different vector rates, possibly corresponding to digital speech signals sampled at different sampling rates.

The invention is based on the finding that at least some kinds of neural network systems may be trained to process feature vectors corresponding to various portions of the digital speech signal having different bandwidths. Therefore, it is possible to use one single neural network system as a pattern matching bloc adapted to features of speech signals having different bandwidths.

In a preferred embodiment, the neural network is a multirate, multitier neural network as described for example in the international application WO-A-00/13170. This document describes a pattern matching bloc that integrates several working frequences in a same neural network, in order to modelise dynamically relations between successives frames. However, the system disclosed in this document is only adapted and trained for speech signals having a specific bandwidth and sampling rate.

Multirate neural networks have the advantage of being adaptable to various bandwiths with a minimal number of computing elements. Further, this has the advantage of providing a more efficient neural network, i.e. a neural network that performs the pattern-matching task reliably and which needs less training. Still further, this allows to use different sampling rates for each sub-band of the input speech signal.

In a preffered embodiment, the speech processing system of the invention comprises a common part of computing elements for processing a common frequency band of different input digital speech signals with different bandwidths, and supplementary computing elements for processing supplementary frequency bands when available.

It may be already known to process different frequency bands of an input speech signal having an expected bandwith with different pattern matching blocs. However, according to the invention, a same pattern matching bloc is able and has been trained to process signals having different bandwidths. Preferably, different outputs of the pattern matching bloc are selected depending on the bandwidth of the input speech signal.

In a preferred embodiment, the neural network comprises several tiers, each tier comprising a plurality of layers of interconnected computing elements, whereas the vector rates of the data streams input to at least two different tiers are different. Thus, the output of one first tier processing signals with a first vector rate is transmitted through a rate adapting element, such as an interpolator or a decimator, to the input of a second tier working at a second vector rate. This has the advantage that at least part of the computing elements, or even complete tiers, are always used regardless of the vector rate of the stream of feature vectors currently processed and thus do need to be duplicated. This has the further advantage that those common computing elements or tiers do need n complete training processes even if the neural network is intended to be used for processing speech signals with *n* different bandwidths.

In a preferred embodiment, at least one common frequency sub-band of different speech signals with different bandwidths is processed by common computing elements, wherein supplementary computing elements are provided for processing supplementary frequency sub-bands. This also has the advantage of reducing the number of computing elements needed for a multi-bandwidth speech processing system by sharing computing elements dedicated to the processing of common frequency bands, and of reducing the amount of training data needed and/or increasing the quality of training with a given amount of data.

The invention will be better understood with the help of the description of a specific embodiment illustrated by the figures in which:
Figure 1 illustrates the general structure of a speech processing system.
Figure 2 illustrates in the frequency domain different frequency bands which are processed by the speech processing system of the invention.
Figure 3 illustrates a first preferred embodiment of a speech processing system including a neural network system according to the invention.
Figure 4 illustrates schematically one tier of the neural network system of the invention.
Figure 5 illustrates another embodiment of a speech processing system including a neural network system according to the invention.

Although the following description describes in more details the special case of a neural network system adapted and trained for speech recognition, the one skilled in the art will understand that the inventive system and method can also be used for various other speech processing tasks, including for instance speaker identification and speaker verification.

Figure 2 illustrates the different bandwidths of typical speech signals that may be processed in various digital environments. In many existing telephony systems, the bandwidth of the analog speech signals one wishes to transmit or store is limited between 0 and 4kHz (b₀). Those signals are then usually PCM-encoded into a digital signal with a sampling rate of 8kHz.

In environments of personal computers or handheld devices, speech is often sampled at 16kHz, or even 32kHz, thus allowing a theoretical bandwidth for the represented analog signal of 8kHz (b1) respectively 16kHz (b₂). Other bandwidths and sampling rates may be found in other environments. Furthermore, it has to be noted that in practical applications the bandwidth and sampling rate are not always directly correlated; it may for example well happen that two signals having different bandwidths are sampled at a common sampling rate.

The bandwidth b₀ of the low-pass signals is thus fully included in the bandwidth b₁, which is itself included in the bandwidth b₂. Hereafter, the sub-band between b₁ and b₀ will be called Δb₁ while the sub-band between b₂ and b₁ will be called Δb₂.

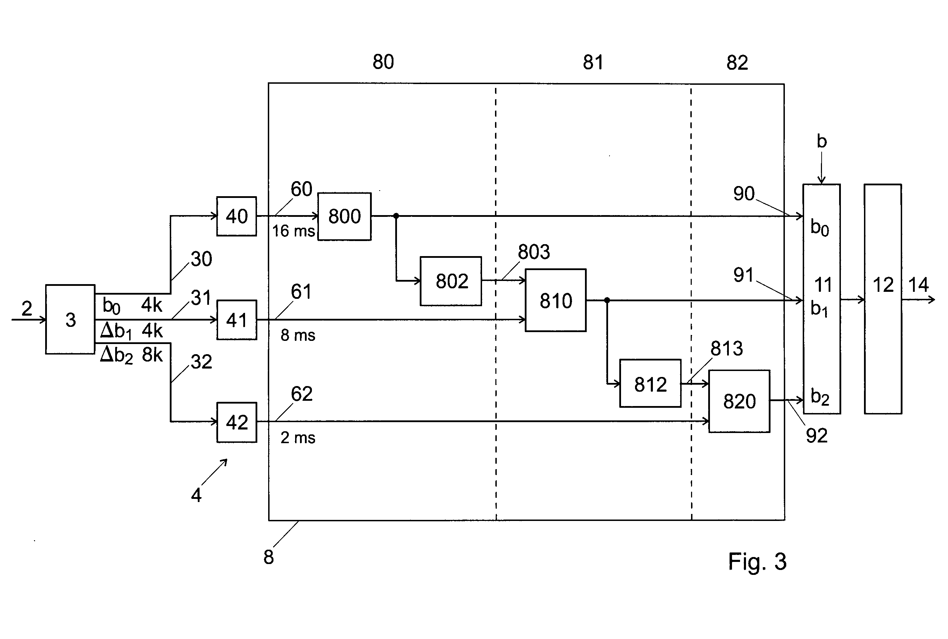

Figure 3 illustrates a first and preferred embodiment of a speech processing system including a neural network system 8 adapted for the classification of feature vectors. Features of the system that correspond to those of the already described Figure 1 share the same reference numbers and will only be described when needed.

The system first comprises a filter 3 for filtering the digital speech signal 2 to be processed and dividing it into signals corresponding to different sub-bands in the frequency domain of the speech signal 2. In this example, the speech signal 2 is divided into three signals 30, 31, 32. The signal 30 corresponds to the sub-band b₀ ( i.e. [0;b0]); the signal 31 corresponds to the sub-band Δb₁ between b₀ and b₁, and the signal 31 corresponds to the sub-band Δb₂ between b₁ and b₂. In the above-described example, the bandwidth of the signals b0 and Δb₁ is 4kHz while the bandwidth of the signal Δb₂ is 8kHz. Advantageously, the sampling rate used for the higher sub-bands is higher, preferably a multiple of the one used for the lower bands.

In another embodiment, the filtering into sub-bands is made in the analog domain, by filtering the analog signal, before converting each analog sub-band into a digital signal. In yet another embodiment, the filter 3 is omitted and the filtering is made by subsequent components of the processing system.

The speech processing system further comprises feature extractors 40, 41 respectively 42 for extracting streams of feature vectors 60, 61 respectively 62 from each digital signal 30, 31 respectively 32 delivered by the filter 3. As already described, the feature extractors may perform various tasks to convert the frames of the sub-band signals 30, 31, 32 into feature vectors representing the same frames with a lower number of bits in the time and frequency domain. The speech processing steps performed by the feature extractors 40, 41, 42 can be conventional for speech applications and will not be described in more details. Preferably, each feature extractor extracts feature vectors using a different method adapted to each sub-band. For example, the psychoacoustic compensation as well as vector rate of the stream of feature vectors delivered preferably depends on each sub-band. Delay compensation means may be provided to compensate for the various delays induced in the sub-bands by the different filters and/or feature extractors.

Experiments and tests have shown that a description of each sub-band signal is sufficient for speech recognition if the vector period is 16 ms at the output of the feature extractor 40, 8ms at the output of the feature extractor 41, and 2ms at the output of the feature extractor 42. Those values are given for illustrative purposes only; other vector rates at the output of the feature extractors may be used.

The stream of feature vectors 60 at the output of the feature extractor 40 thus contains a sufficient representation of the first sub-band b₀. If the speech signal 2 is itself limited to this bandwidth, the speech recognition will be performed only from this stream 60. If the speech signal is limited to the bandwidth until b₁, a more precise or more robust speech processing task can be performed by using the stream of feature vectors 61 in addition to the stream 60. Finally, if the bandwidth is not limited to b₁, the speech processing task will advantageously use all the three feature vector streams 60, 61, 62 delivered by the three feature extractors 40, 41, 42.

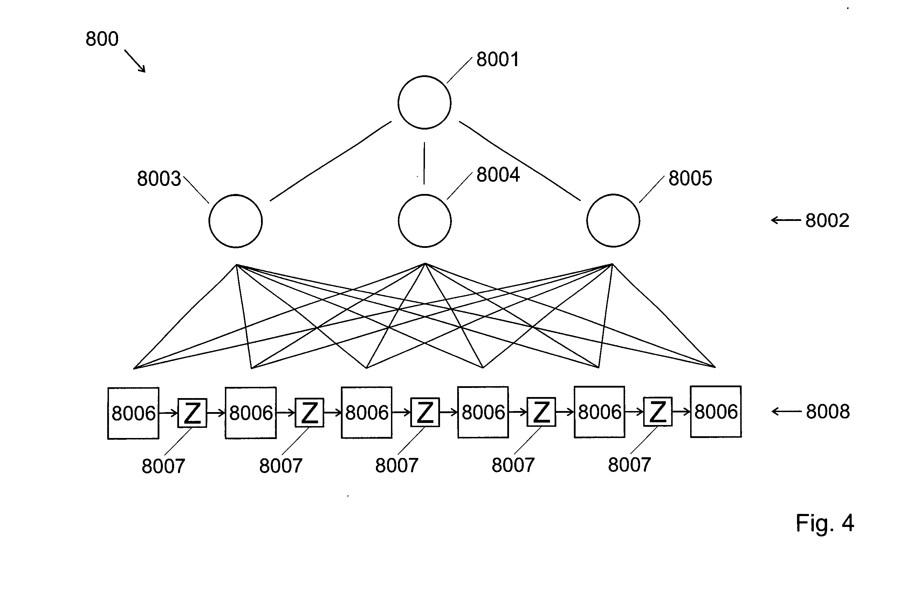

We will now describe a preferred embodiment of the invention in which the pattern matching bloc comprises a single neural network system 8 with several tiers 80, 81, 82. In the example, each tier comprises a multilayer neural network 800, preferably a time delay neural network (TDNN). An example of tier is illustrated on Figure 4. It comprises in this example an input layer 8008, an intermediate layer 8002 and an output layer 8001. The input layer comprises a shift register with a plurality of cells 8006 connected through time delay elements 8007. In the example, the input layer is fully connected to the intermediate (hidden) layer 8002 comprising computing elements (neurons) 8003, 8004 and 8005. The hidden layer 8002 is itself fully connected to the output layer 8001 which in the simplified example comprises one single computing element 8001. This architecture is conventional and the one skilled in the art will understand that a greater number of computing elements, and/or other neural network architectures may be used in the frame of the invention for performing some speech processing tasks. Furthermore, the connections needed for training the neural networks as well as the weighting coefficients are not shown in the simplified representation.

The first tier 80 comprises a first neural network 800, preferably a time delay neural network, for processing the low-pass feature vectors stream 60. The neural network 800 delivers a stream of matching probabilities at the vector rate of the stream 60, in the example each 16 ms. This stream of probabilities 90 is delivered to a band selector 11 which will be later described, and to a rate adapting element, in this case an interpolator 802. The interpolator 802 over-samples the probabilities stream 90 and delivers an interpolated stream of values 803 at an increased rate corresponding preferably to the vector rate of the stream 61 delivered by the second feature extractor 41.

Rate adapting elements in neural network systems are already known per se. The one skilled in the art will refer to the already mentioned application WO-A-0013170 for a more detailed description of those elements.

The second tier 81 comprises a second neural network 810, preferably a time delay neural network, which processes the interpolated values 803 delivered by the interpolator 802 as well as the second feature vector stream 61 corresponding to the intermediate sub-band.

The second neural network 810 delivers a second stream of matching probabilities at the vector rate of the stream 61, in the example each 8 ms. This stream of probabilities 91 is delivered to the band selector 11, and to a second rate adapting element, in this case an interpolator 812. The interpolator 812 computes an interpolated stream of values 813 at an increased rate corresponding preferably to the vector rate of the stream 62 delivered by the third feature extractor 42.

Similarly, the third and last tier 82 comprises a third neural network 820, preferably a time delay neural network, which processes the interpolated values 813 delivered by the interpolator 813 as well as the third feature vector stream 62 corresponding to the higher sub-band for computing a third stream of matching probabilities 92 at the vector rate of the stream 62, in the example each 2 ms. The stream 92 is delivered to the band selector 11.

The band selector 11 selects one of the three streams of probabilities 90, 91 or 92 depending on the bandwidth b of the input speech signal 2. In many applications, this bandwidth is a-priori known, but can also be determined by a separate bandwidth determination module or by the neural network itself, for example by a specially trained output of the neural network system 8. This may prove useful when the bandwidth of the speech signal is unknown, for instance when it depends on an external parameter such as the momentarily available bandwidth on a transmission channel, or when the bandwidth is varying, which is for example the case in telecommunications systems using a variable transmission rate, including notably VolP systems (Voice over IP). In this case, the bandwidth of the input speech signal is preferably continuously measured in order to dynamically switch the output of the pattern matching system depending on said bandwidth.

If the bandwidth b is limited to b₀, the selector 11 will select the stream 90 computed only from this sub-band. If the bandwidth b is between b₀ and b₁, the output 91 of the second neural network which is determined not only from the sub-band b₀ to b₁ but also from the output of the first neural network 800 is likely to be more reliable and will therefore be selected. In all other cases, the band selector 11 will select the output 92 of the third neural network 820 that depends on all three subbands.

The decoding bloc 12 determines then the most likely sentence or set of speech elements 14 spoken by the speaker given the selected stream of probabilities 90, 91 or 92 selected by the band selector 11.

The neural network system of the embodiment illustrated on Figure 3 can be trained during the training phase with an error back propagation algorithm by applying target probabilities to the output of the pattern matching bloc 8. Decimators (not shown) may be provided to transmit at the corresponding vector rate the computed input feature vectors to the output of the preceding tier. In a preferred embodiment, target vectors are applied directly to the output of each tier 80, 81, 82 in order to avoid the need for decimators.

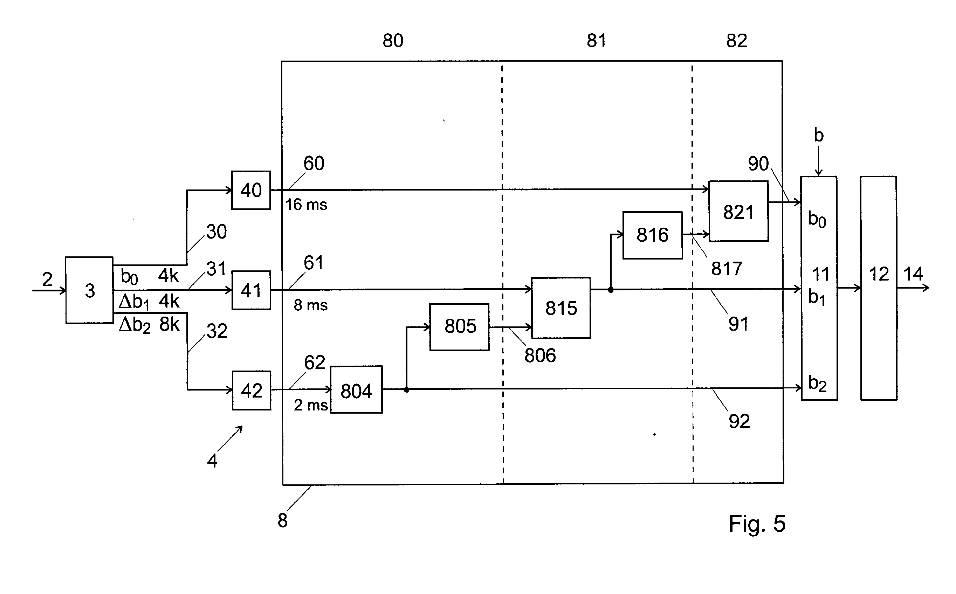

Figure 5 describes a second embodiment of a speech processing system including a neural network system according to the invention. Similarly to the embodiment illustrated on Figure 3, the pattern matching bloc also comprises a single neural network system 8, for example a time delay neural network, with several tiers 80, 81, 82.

The first tier 80 comprises a first neural network 804, preferably a time delay neural network, for processing the high-pass feature vectors stream 62. The neural network 804 delivers a stream of matching probabilities at the vector rate of the stream 62, in the example each 2 ms. This stream of probabilities 92 is delivered to a band selector 11 which will be later described, and to a rate-adapting element, in this case a decimator 805. The decimator 805 sub-samples the probabilities stream 92 and delivers a decimated stream of values 806 at a reduced rate corresponding preferably to the vector rate of the stream 61 delivered by the second feature extractor 41.

The second tier 81 comprises a second neural network 815, preferably a time delay neural network, which processes the decimated values 806 delivered by the decimator 805 as well as the second feature vector stream 61 corresponding to the intermediate sub-band.

The second neural network 815 delivers a second stream of matching probabilities at the vector rate of the stream 61, in the example each 8 ms. This stream of probabilities 91 is delivered to the band selector 11, and to a second rate adapting element, in this case a decimator 816. The decimator 816 computes a decimated stream of values 817 at a reduced rate corresponding preferably to the vector rate of the stream 60 delivered by the first feature extractor 40.

Similarly, the third and last tier 82 comprises a third neural network 821, preferably a time delay neural network, which processes the decimated values 817 delivered by the decimator 816 as well as the first feature vector stream 60 corresponding to the lower sub-band for computing a third stream of matching probabilities 90 at the vector rate of the stream 60, in the example each 2 ms. The stream 90 is delivered to the band selector 11 which, as described above, will select one of the streams 90, 91 or 92 depending on the bandwith of the input speech signal 2.

The decoding bloc 12 then determines the most likely sentence or set of speech elements 14 spoken by the speaker given the selected stream of probabilities 90, 91 or 92 selected by the band selector 11.

The neural network system of the embodiment of Figure 5 can be trained during the training phase with an error back propagation algorithm by applying target probabilities to the output of the pattern matching bloc 8. Interpolators (not shown) may be provided to transmit at the corresponding vector rate the computed input feature vectors to the output of the preceding tier. In a preferred embodiment, target vectors are applied directly to the output of each tier 80, 81, 82 in order to avoid the need for interpolators.

The invention has been illustrated by a preferred embodiment in which the matching probabilities are computed by a multitier and multirate neural network 8. However, matching probabilities may also be computed by a more conventional pattern matching system which has been trained to distinguish by itself, or using a special input, between streams of feature vectors corresponding to portions of speech signals having different bandwidths and possibly sampled at different rates. In this case, the value delivered by each neuron in the network will depend on the previously determined sampling rate to which the input stream of feature vectors corresponds.

The invention can also be used in handheld devices or other terminals where a received speech signal is compressed and/or filtered in order to reduce the bandwidth and thus the required sampling rate, thus adapting the processing power, storage requirements and power consumption.

The neural network system 8 can be realized with software and/or with hardware components. In the latter case, the illustrated embodiment can be used for reducing the power consumption by disconnecting one or more upper, faster working tiers 82 and 81, regardless of the bandwidth of the input speech signal. This allows having a neural network in which the power consumption can be adapted to various needs.

## Claims

1. A speech processing system (8) comprising one pattern matching bloc with a plurality of interconnected computing elements (8001, 8003, 8004, 8005),
**characterized in that** said pattern matching bloc has been trained to process speech feature vectors (6) corresponding to portions of speech signals having different bandwidths.

2. The speech processing system of claim 1, comprising a plurality of tiers (80, 81, 82), each tier comprising a plurality of computing elements (8001, 8003, 8004, 8005).

3. The speech processing of claim 2, wherein each said tier comprises a plurality of interconnected layers (8001, 8002) of computing elements.

4. The neural network system of one of the claims 1 to 3, wherein said pattern matching bloc includes a multirate neural network.

5. The speech processing system of claim 4, wherein the vector rate of the streams of speech feature vectors (6) input to at least two different tiers (80, 81, 82) is different.

6. The speech processing system of claim 5, wherein the output of at least one first said tier (80; 81) having a first vector rate is input to a second tier (81; 82) with a second vector rate, a rate adapting element (802; 812; 805; 816) being provided between said first tier (80; 81) and said second tier (81; 82).

7. The speech processing system of claim 6, wherein said rate adapting element is an interpolator (802, 812).

8. The speech processing system of claim 6, wherein said rate adapting element is a decimator (805, 816).

9. The speech processing system of one of the claims 5 to 8, wherein a first stream of speech feature vectors (60) with a first vector rate is input to a first tier (80), and wherein a second stream of speech feature vectors (61) with a second vector rate is input to a second tier (81) with the output of said first tier (80).

10. The speech processing of claim 9, wherein said first (60) and second (61) streams of speech feature vectors correspond to different frequency bands (b₀, Δb₁, Δb₂) of an input digital speech signal.

11. The speech processing of one of the claims 1 to 10, wherein at least one common frequency band (b₀) of different input digital speech signals with different bandwidths is processed by a common part (80) of said computing elements, and wherein supplementary computing elements (81, 82) are provided for processing supplementary frequency bands (Δb₁, Δb₂).

12. The speech processing of claim 11, wherein the sampling rates used for at least two different frequency bands are different.

13. The speech processing of one of the claims 11 or 12, wherein at least one rate adapting element (802, 812; 805, 816) is provided between said common part (80) and said supplementary computing elements (81, 82).

14. The speech processing system of one of the claims 2 to 13, wherein at least one tier (80, 81, 82) comprises at least one time delay neural network (800, 810, 820; 804,815,821).

15. The speech processing system of one of the claims 1 to 14, further comprising a band selector (11) for selecting an output of said pattern matching bloc (80, 81, 82) depending on the bandwidth of said speech signal.

16. The speech processing system of one of the claims 1 to 15, further comprising a bandwidth detection module for detecting the bandwidth of said speech signal.

17. The speech processing system of claim 16, wherein said bandwidth detection module is a part of said pattern matching bloc.

18. The speech processing system of one of the claims 16 or 17, wherein said bandwidth detection module is a part of said pattern matching bloc.

19. The speech processing system of one of the claims 16 to 18, wherein said bandwidth detection module is able to continuously detect said bandwidth and to dynamically switch the output of said pattern matching system depending on said bandwidth.

20. The speech processing system of one of the claims 1 to 19, further comprising one feature extractor (40, 41, 42) for each vector rate to be processed, each said feature extractor delivering one stream of said feature vectors (60, 61, 62).

21. The speech processing system of one of the claims 1 to 20, being trained for processing frames of a digital speech signal, wherein said frames correspond to different speech segment duration.

22. The speech processing system of claim 21, being trained for processing frames including speech samples that may have been sampled at different rates.

23. The speech processing system of claim 22, being trained for processing said frames including different amounts of speech samples.

24. The speech processing system of one of the claims 1 to 23, being trained for speech recognition.

25. The speech processing system of one of the claims 1 to 24, being trained for speaker identification and/or speaker verification.

26. Speech processing method, comprising:
extracting from a digital speech signal (2) a stream of feature vectors (40, 41, 42) with a bandwidth,
using a single pattern matching bloc (8) for comparing said features with a set of previously learned features,
**characterized in that** different outputs (90, 91, 92) of said pattern matching bloc are used depending on said bandwidth.
